Europäisches Patentamt

European Patent Office

Office européen des brevets

(11) Veröffentlichungsnummer: **0 403 736**
**A2**

## EUROPÄISCHE PATENTANMELDUNG

(21) Anmeldenummer: 90105234.0

(51) Int. Cl.⁵: **B23K 37/06, B23D 65/00**

(22) Anmeldetag: **20.03.90**

(30) Priorität: **03.04.89 DE 3910658**

(43) Veröffentlichungstag der Anmeldung:
**27.12.90 Patentblatt 90/52**

(84) Benannte Vertragsstaaten:
**AT DE FR SE**

(71) Anmelder: **FIRMA RÖTTGER JANSEN-HERFELD**
**Königstrasse 144-146**
**D-5630 Remscheid(DE)**

(72) Erfinder: **FIRMA RÖTTGER JANSEN-HERFELD**
**Königstrasse 144-146**
**D-5630 Remscheid(DE)**

(54) **Vorrichtung zum Aufschweissen von verschleissfestem (Stellit) Material auf Sägenzähne.**

(57) Vorrichtung zum Auftragen von Stellitzähnen mittels Schweißen, wobei die die Zahnform geben-den Formbacken mit einem Schwingungserreger verbunden sind, der das flüssige Stellitzahnmaterial und das Sägeblatt in Schwingungen versetzt und dadurch eine genaue Einformung des Stellitzahnes aufgrund der Form der Formbacken ermöglicht.

Fig 1

EP 0 403 736 A2

## Vorrichtung zum Aufschweißen von verschleißfestem (Stellit) Material auf Sägenzähne

Es sind Vorrichtungen zum Auftragen von Stellit auf Sägenzähne bekannt geworden, bei denen das erhitzte, d. h. verflüssigte Stellitmaterial in eine Form getropft wird, die die form des gewünschten Zahnes aufweist.

Der so erzeugte Stellitzahn weist eine Form auf, die von der durch die Formbacken vorgegebenen Form abweicht, weil das flüssige Stellit aufgrund seiner Oberflächenspannung nicht die scharfkantigen Formen ausfüllen kann. Außerdem bildet sich auf der offenen Formseite eine konvexe Wölbung des Stellites, die ebenfalls durch die Oberflächenspannung hervorgerufen wird.

Ein weiterer Nachteil dieses Verfahrens ist, daß sich durch die Tropfen Lunker im Zahn bilden können.

Der Erfindung liegt die Aufgabe zugrunde, eine Vorrichtung zu schaffen, bei der sich das Stellit wesentlich genauer der vorgegebenen Form der Formbacken anpaßt, die konvexe Wölbung an der offenen Formseite eingeebnet ist und die Lunker beseitigt sind.

Die erfindungsgemäße Vorrichtung weist die bekannten Formbacken auf, die jedoch ihrerseits federnd an dem Maschinenkörper befestigt sind und zudem mit einem Schwingungserreger verbunden sind, der die Formbacken in Schwingungen versetzt, um das flüssige Stellit ebenfalls in Schwingungen zu versetzen und damit eine exakte Einformung desselben gemäß der vorgegebenen Form der Formbacken zu gewährleisten, da das flüssige in Schwingung versetzte Stellitmaterial auch scharfkantige Ecken ausfüllt und an seiner oberen Fläche eine gerade Ebene bildet.

Auf diese Weise wird das abzuschärfende Volumen, um eine exakte Zahngeometrie zu erzeugen, auf ein Minimum reduziert und die erforderliche Menge Stellit ebenfalls verringert. Außerdem steigen bei der Schwingungsbewegung eingeschlossene Lunker nach oben und beeinträchtigen somit nicht mehr die Zahnqualität.

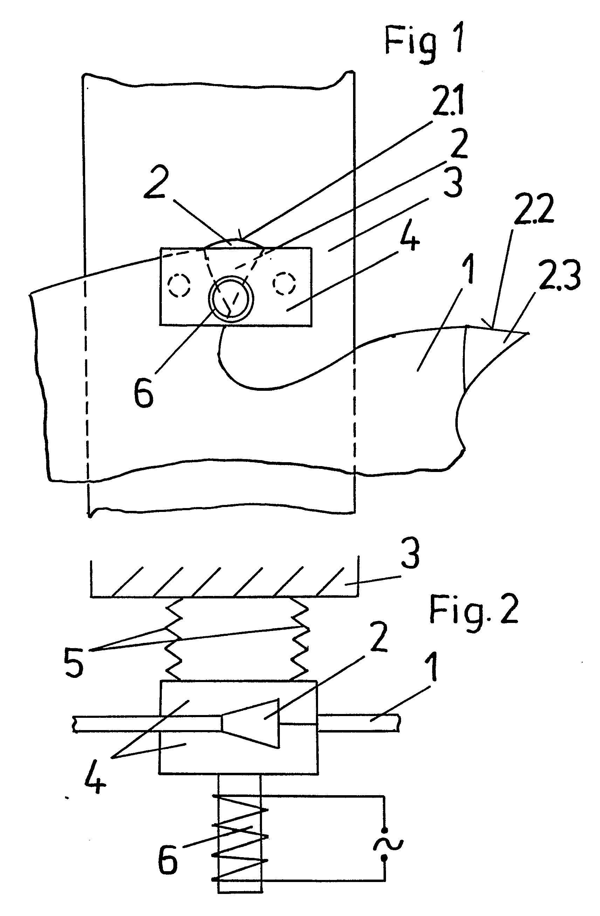

Figur 1 zeigt die erfindungsgemäße Vorrichtung in Seitenansicht mit dem Sägeblatt (1), dem Stellitzahn (2) vor dem Maschinenkörper (3) und den Formbacken (4), die mit dem Schwingungserreger (6) verbunden sind. Der Stellitzahn (2) weist an seiner oberen Fläche die konvexe Wölbung (2.1) vor der Einebnung durch die Schwingungserregung auf und ein weiterer Zahn (2.3) zeigt die obere Fläche (2.2) nach der Einebnung durch die Schwingungserregung.

Figur 2 zeigt die gleiche Anordnung in Draufsicht mit dem Stellitzahn (2) zwischen den Backen (4), die mit Federn (5) mit dem Maschinenkörper (3) verbunden sind und den Schwingungserreger (6).

Bezugszeichenliste

1 Sägeblatt
2 Stellitzahn
3 Maschinenkörper
4 Formbacken
5 Federelement
6 Schwingungserreger

## Ansprüche

1) Vorrichtung zum Auftragen von Stellitzähnen mittels Schweißen und Formgebung der Stellitzähne (2), durch Formbacken (4) dadurch gekennzeichnet, daß der zwischen den Formbacken (4) befindliche flüssige Stellitzahn (2) und das Sägeblatt (1) mittels eines Schwingungserregers (6) in Schwingungen versetzbar sind.

2) Vorrichtung zum Auftragen von Stellitzähnen mittels Schweißen nach Anspruch 1 dadurch gekennzeichnet, daß die Formbacken (4) mittels Federelementen (5) schwingungselastisch mit dem Maschinenkörper (3) verbunden sind.

3) Vorrichtung zum Auftragen von Stellitzähnen mittels Schweißen nach Anspruch 1 bis 2 dadurch gekennzeichnet, daß die Öffnung der Formbacken (4) horizontal angeordnet ist bzw., daß der aufzuschweißende Zahn um seinen Freiwinkel gegenüber einer Horizontalen geneigt ist.

EP 0 403 736 A2

**Fig 1**

2.1
2
3
22
4
1
2.3
2
6

**Fig. 2**

3
5
2
1
4
6
~

Fa. R. Jansen-Herfeld